**Europäisches Patentamt**

**European Patent Office**

**Office européen des brevets**

(11) Veröffentlichungsnummer: **0 216 064**
A1

(12) **EUROPÄISCHE PATENTANMELDUNG**

(21) Anmeldenummer: **86110070.9**

(22) Anmeldetag: **22.07.86**

(51) Int. Cl.⁴: **B 23 C 5/14**
B 23 C 5/22, B 23 B 51/00

(30) Priorität: **19.08.85 DE 3529620**

(43) Veröffentlichungstag der Anmeldung:
**01.04.87 Patentblatt 87/14**

(84) Benannte Vertragsstaaten:
**AT BE CH DE FR GB IT LI LU NL SE**

(71) Anmelder: **Walter Kieninger GmbH Hartmetall- und Diamantwerkzeugfabrik**
**An den Stegmatten 7**
**D-7630 Lahr-Mietersheim(DE)**

(72) Erfinder: **Kieninger, Walter**
**An den Stegmatten 7**
**D-7630 Lahr 17(DE)**

(74) Vertreter: **Patentanwälte Grünecker, Kinkeldey, Stockmair & Partner**
**Maximilianstrasse 58**
**D-8000 München 22(DE)**

(54) **Schneidplatte.**

㉗ Die Erfindung betrifft eine Schneidplatte zum Fräsen von Höhlungen mit einem plattenförmigen Aufnahmeteil (2) und einem mit zumindest einer Schneide (4) versehenen Schneidenteil (3). Zum Zwecke einer geringen und gleichmäßigen Belastung der Schneide (4) und um eine betriebssichere Spanabfuhr zu gewährleisten, ist erfindungsgemäß vorgesehen, daß die Schneidplatte im Bereich des Schneidenteils (3) gegenüber dem Aufnahmeteil (2) verdickt ausgebildet ist und daß die Schneide (4) einen wendelartigen Verlauf relativ zur Drehachse (5) der Schneidplatte aufweist.

FIG.6

FIG.7

EP 0 216 064 A1

Croydon Printing Company Ltd.

## Beschreibung

## Schneidplatte

Die Erfindung bezieht sich auf eine Schneidplatte zum Fräsen von Höhlungen mit einem plattenförmigen Aufnahmeteil und mit einem mit zumindest einer Schneide versehenen Schneidenteil.

Beim Fräsen von Höhlungen, wie z.B. Kugelbahnen homokinetischer Gelenke, treten, bedingt durch die Geometrie der Höhlungen, an den verschiedenen Schneidenbereichen einer Schneidplatte ungleichmäßige Belastungen auf, so daß gewisse Bereiche der Schneidplatte schneller verschleissen und zum Wechseln der Schneidplatte zwingen. Weiterhin treten als Folge dieser ungleichmößigen Belastungen in den einzelnen Bereichen der Schneide verschiedene Zerspanungsparameter auf, welche zu unterschiedlicher Spanbildung und zu unterschiedlicher Oberflächengüte führen. Deshalb ergeben sich, insbesondere bei Höhlungen geringer Dimensionen Probleme mit der Spanabfuhr.

Der Erfindung liegt die Aufgabe zugrunde, eine Schneidplatte der eingangs genannten Art zu schaffen, welche eine kleine, gleichmäßige Schneidenbelastung ermöglicht und bei welcher eine betriebssichere Spanabfuhr gewährleistet ist.

Die Aufgabe wird erfindungsgemäß dadurch gelöst, daß die Schneidplatte im Bereich des Schneidenteils gegenüber dem Aufnahmeteil verdickt ausgebildet ist und daß die Schneide einen wendelartigen Verlauf relativ zur Drehachse der Schneidplatte aufweist.

Die erfindungsgemäße Schneidplatte weist gegenüber dem Stand der Technik erhebliche Vorteile auf. Durch die verdickte Ausbildung im Bereich des Schneidenteils ist es möglich, unabhängig von der Geometrie des Aufnahmeteils die Schneiden so auszugestalten, daß sie in optimaler Weise an den Zerspanungsprozeß anpaßbar sind. Dadurch, daß die Schneide einen wendelartigen Verlauf relativ zur Drehachse der Schneidplatte aufweist, ist es möglich, an den verschiedenen Schnittbereichen der Schneidplatte, welche verschiedenen geometrischen Abschnitten der Höhlungen entsprechen, stets eine optimale Neigung bzw. Steigung der Schneide vorzusehen. Auf diese Weise werden die erforderlichen Schnitt- und Vorschubkräfte erheblich gesenkt. Weiterhin tritt eine gleichmäßige Spanbildung auf, so daß die Spanabfuhr in problemloser Weise erfolgen kann, ohne daß die Gefahr besteht, daß bereits erzeugte Späne den Zerspanungsvorgang negativ beeinträchtigen. Ein weiterer Vorteil der erfindungsgemäßen Schneidplatte ergibt sich daraus, daß der Aufnahmeteil nicht verdickt ausgebildet ist, so daß die Schneidplatte in handelsübliche Werkzeuge einsetzbar ist.

Eine vorteilhafte Ausgestaltung der erfindungsgemäßen Schneidplatte ist dadurch gegeben, daß eine in Drehrichtung der Schneidplatte hinter der Schneide angeordnete Spankammer hinter der Schneide angeordnete Spankammer einen wendelarigen Verlauf relativ zur Drehachse der Schneidplatte. Auf diese Weise wird erreicht, daß die Spankammer an die Geometrie und Ausbildung der Schneide angepaßt ist und unter allen Betriebsbedingungen eine optimale Abfuhr der Späne ermöglicht. Ein Verklemmen von Spänen zwischen der Spankammer und den Wandungen der Höhlung wird somit vermieden.

Eine vorteilhafte Ausbildung der Spanplatte ist weiterhin dadurch gegeben, daß die wendelartige Schneide vom stirnseitigen Bereich der Schneidplatte zu deren rückseitigem Bereich hin in Drehrichtung rückläufig ausgebildet ist. Eine derartige Ausgestaltung führt zu einer gleichmäßigeren Belastung der Schneiden und verhindert somit partiell auftretenden übermäßigen Verschleiß.

Schneidplatten, welche erfindungsgemäß in der vorstehend genannten Art ausgebildet sind, können in handelsübliche Werkzeuge, wie z.B. einen Messerkopf oder einen Aufnahmeschaft eingesetzt werden. Dabei kann es ausreichend sein, die Schneidplatte lediglich mit einer Schneide, welche sich vom stirnseitigen Bereich zu einem seitlichen Bereich erstreckt, zu versehen.

Eine günstige Ausgestaltungen der erfindungsgemäßen Schneidplatte ist dadurch gegeben, daß diese symmetrisch zur Drehachse ausgebildet ist und daß die Schneiden auf einer Hüllkugel angeordnet sind. Mit einer derartigen Schneidplatte ist es auf einfachste Weise möglich, Höhlungen mit teilkreisförmigem Querschnitt, insbesondere Kugelbahnen zu erzeugen. Bei einer derartigen Schneidplatte erweist es sich weiterhin als vorteilhaft, daß der im stirnseitigen Bereich der Schneidplatte angeordnete wendelartige Schneidenbereich in Drehrichtung vorlaufend ausgebildet ist. Dies führt dazu, daß dieser Bereich bei einem Vorschub der Schneidplatte bzw. des mit dieser versehenen Werkzeugs zuerst zum Schnitteinsatz gelangt.

Eine weitere vorteilhafte Ausgestaltung der Schneidplatte ist dadurch gegeben, daß diese symmetrisch zur Drehachse ausgebildet ist und daß die Schneiden auf einem Hüllzylinder angeordnet sind. Auf diese Weise ist es möglich, Rillen oder Kugelbahnen mit einem rechteckigen Querschnitt zu erzeugen. Weiterhin ist es möglich, sacklochartige Höhlungen zu erzeugen.

Die erfindungsgemäße Schneidplatte kann auch in beliebigen anderen Formen ausgebildet sein, bei welchen die Schneiden z.B. auf einem Hüllkegelstumpf oder auf einem Hüllellipsoid angeordnet sind.

Im folgenden wird die Erfindung anhand von Ausführungsbeispielen in Verbindung mit der Zeichnung beschrieben. Dabei zeigen:

Fig. 1    eine Draufsicht auf den stirnseitigen Bereich eines ersten Ausführungsbeispiels,

Fig. 2    eine Seitenansicht auf die in Fig. 1 rechtsliegende Seite,

Fig. 3    eine Unteransicht der Darstellung von Fig. 1,

Fig. 4    eine Seitenansicht auf die in Fig. 1 obenliegende Seite,

Fig. 5    eine Draufsicht auf ein zweites Ausführungsbeispiel,

Fig. 6    eine Seitenansicht der in Fig. 5 rechtsliegenden Seite,

Fig. 7    eine Seitenansicht der in Fig. 5 obenliegenden Seite, und

Fig. 8    eine schematische Darstellung eines Aufnahmeschafts mit einer daran befestigten erfindungsgemäßen Schneidplatte.

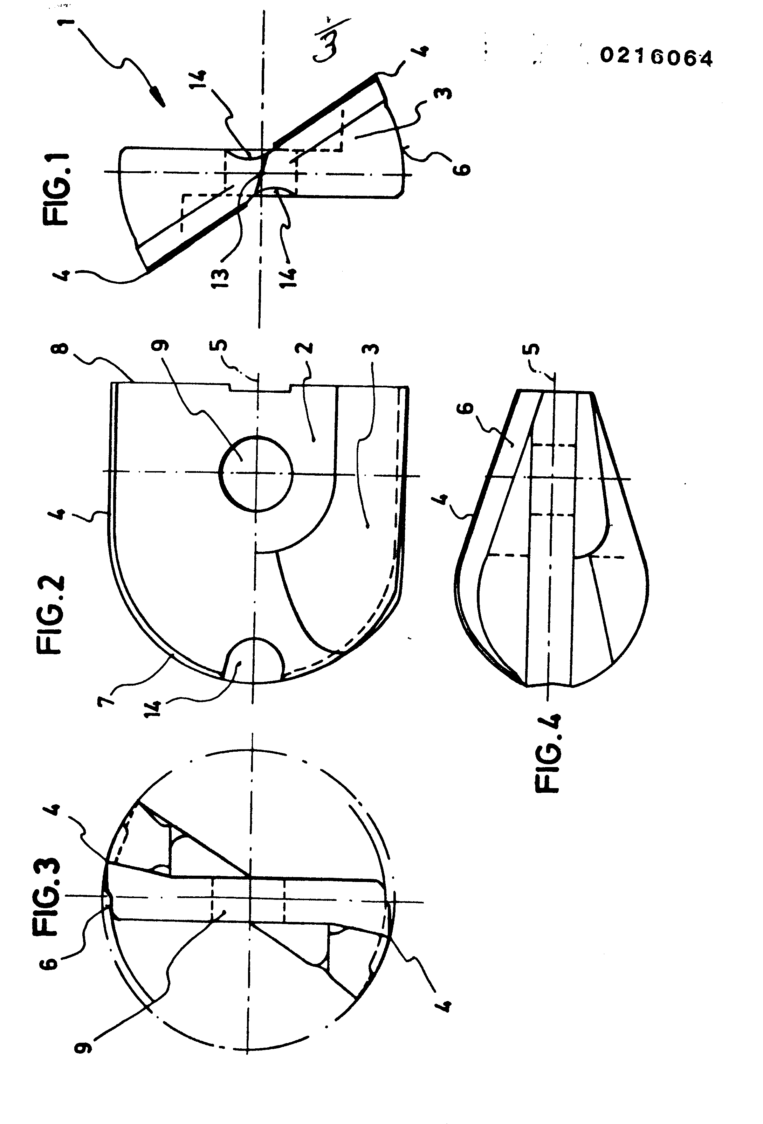

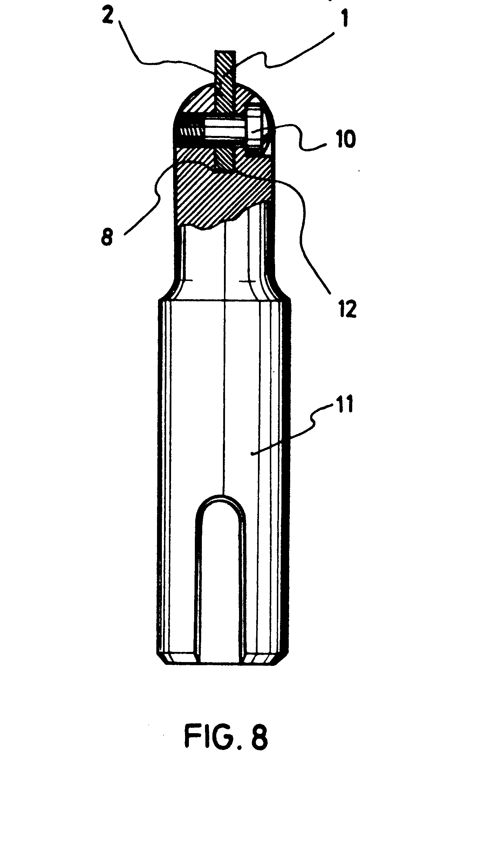

In den Fig. 1 bis 4 ist ein erstes Ausführungsbeispiel einer erfindungsgemäßen Schneidplatte dargestellt. Die Schneidplatte 1 weist einen Aufnahmeteil 2 auf, welcher plattenförmig ausgebildet ist und mit einer Ausnehmung 9 versehen ist. Der Aufnahmeteil 2 ist plattenförmig ausgestaltet und weist eine gleichbleibende Dicke auf, so daß er, wie nachfolgend in Fig. 8 dargestellt ist, in eine Nut eines Werkzeugs einsetzbar ist. Bei der in Fig. 2 dargestellten Seitenansicht der Schneidplatte 1 ist links ein stirnseitiger Bereich 7 und rechts ein rückseitiger Bereich 8 vorgesehen. Der rückseitige Bereich 8 ist beim Einsatz in eine Nut eines Werkzeugs mit dem Nutgrund in Eingriff bringbar, so daß eine sichere Befestigung der Schneidplatte gewährleistet ist. Bei dem gezeigten Ausführungsbeispiel ist die Schneidplatte symmetrisch zu einer Drehachse 5 ausgebildet. Ein Schneidenteil 3 ist gegenüber dem Aufnahmeteil 2 verdickt ausgebildet. Der Schneidenteil 3 weist eine Schneide 7 auf, deren stirnseitiger Teil im wesentlichen auf einer Hüllkugel angeordnet ist. Die Schneide 4 ist auf dem verdickten Schneidenteil 3 so angeordnet, daß sie einen wendelartigen Verlauf relativ zur Drehachse 5 aufweist. Die Verdickung des Schneidenteils 3 ist so bemessen, daß der wendelartige Verlauf der Schneide 4 erzielt werden kann, ohne daß die Schneidplatte an einer Stelle die Dicke des plattenförmigen Aufnahmeteils 2 unterschreitet. Somit ist eine ausreichende Festigkeit der Schneidplatte gewährleistet. Die in dem gezeigten Ausführungsbeispiel vorgesehenen Schneiden 4 gehen im stirnseitigen Bereich 7 der Schneidplatte 1 in eine Querschneide 13 über. Der Anschliff der Schneiden 4 sowie der Querschneide 13 ist an die zu bearbeitenden Materialien und die gewünschte Schnittgeschwindigkeit anpaßbar. In Drehrichtung hinter der Schneide 4 ist eine Spankammer 6 vorgesehen, welche ebenfalls einen wendelartigen Verlauf aufweist. Bedingt durch den wendelartigen Verlauf der Schneide 4 kann die Dicke des Schneidenteils 3 an verschiedenen Umfangsstellen der Schneidplatte 1 verschiedene Werte annehmen. Die genaue Bemessung kann den zugrundeliegenden Schnittparametern angepaßt werden. Im Bereich der Querschneide 13 weist die Spannplatte 1 einen Freischliff 14 auf, dessen Dimensionierung ebenfalls den Schneidparametern und dem zu spanenden Werkstoff angepaßt sein kann.

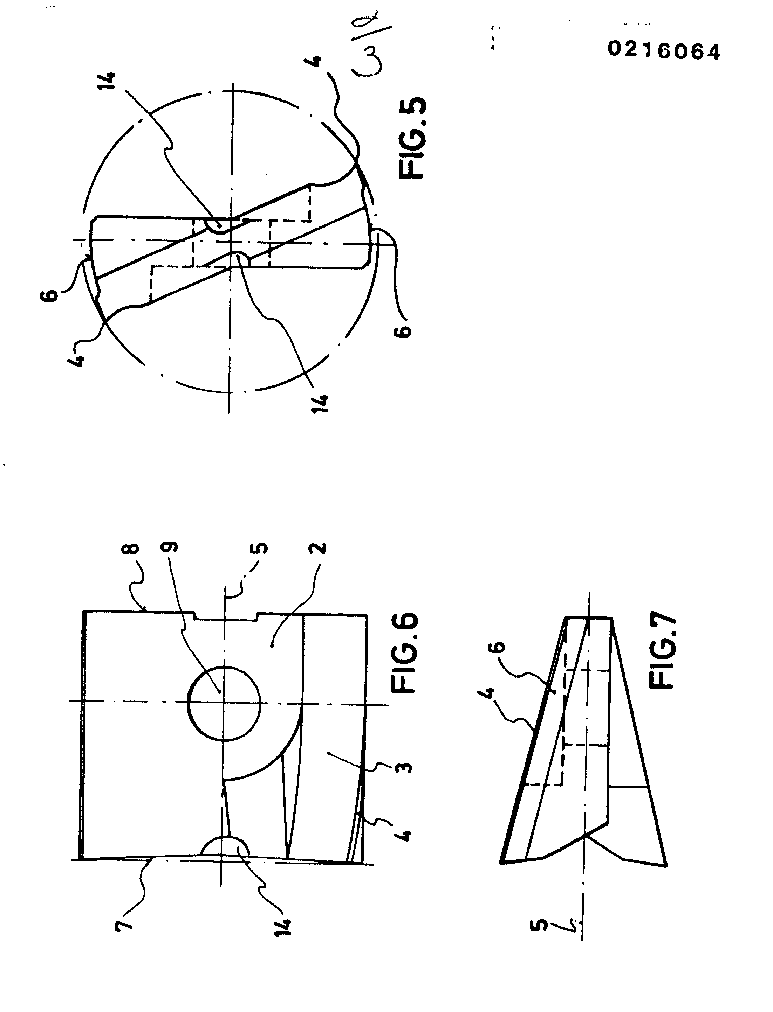

In den Fig. 5 bis 7 ist ein zweites Ausführungsbeispiel dargestellt, welches analog dem ersten Ausführungsbeispiel der Fig. 1 bis 4 aufgebaut ist. Die Schneiden 4 liegen jedoch bei diesem Ausführungsbeispiel nicht auf einer Hüllkugel, sondern auf einem Hüllzylinder. Der stirnseitige Bereich 7 der Schneidplatte ist bei dem gezeigten Ausführungsbeispiel nicht mit einer Schneide versehen, so daß diese Schneidplatte hauptsächlich zur Erzeugung von Nuten mit rechteckigem Querschnitt dient, wobei die Vorschubrichtung um 90° zur Drehachse 5 versetzt ist.

In Fig. 8 ist in schematischer Weise ein Aufnahmeschaft 11 dargestellt, welcher im wesentlichen zylindrisch ausgebildet ist und an seinem vorderen Ende eine Nut 12 aufweist, in welche die Schneidplatte 1 mit ihrem Aufnahmeteil 2 einsetzbar ist. Ein Befestigungsorgan 10, in dem gezeigten Ausführungsbeispiel eine Schraube, ist durch die Ausnehmung 9 der Schneidplatte 1 angeordnet und dient somit der Befestigung der Schneidplatte 1. Der rückseitige Bereich 8 der Schneidplatte liegt in fester Anlage gegen den Grund der Nut 12 an.

GRÜNECKER, KINKELDEY, STOCKMAIR & PARTNER

PATENTANWÄLTE
EUROPEAN PATENT ATTORNEYS

A. GRÜNECKER, DIPL.-ING
DR H. KINKELDEY, DIPL.-ING
DR W. STOCKMAIR, DIPL.-ING. AE E (CA. TECH.)
DR K. SCHUMANN, DIPL.-PHYS
P. H. JAKOB, DIPL.-ING
DR G. BEZOLD, DIPL.-CHEM
W. MEISTER, DIPL.-ING
H. HILGERS, DIPL.-ING
DR H. MEYER-PLATH, DIPL.-ING
DR M. BOTT-BODENHAUSEN, DIPL.-PHYS
DR U KINKELDEY, DIPL.-BIOL

*LICENCE EN DROIT DE L UNIV DE GENEVE

8000 MÜNCHEN 22
MAXIMILIANSTRASSE 58

**0216064**

EP 3044

Walter Kieninger GmbH

An den Stegmatten 7

7630 Lahr 17

Schneidplatte

P a t e n t a n s p r ü c h e

1. Schneidplatte zum Fräsen von Höhlungen mit einem plattenförmigen Aufnahmeteil und mit einem mit zumindest einer
Schneide versehenen Schneidenteil, dadurch g e k e n n -
z e i c h n e t , daß die Schneidplatte (1) im Bereich des
Schneidenteils (3) gegenüber dem Aufnahmeteil (2) verdickt
ausgebildet ist und daß die Schneide (4) einen wendelartigen Verlauf relativ zur Drehachse (5) der Schneidplatte
(1) aufweist.

2. Schneidplatte nach Anspruch 1, dadurch g e k e n n -
z e i c h n e t , daß eine in Drehrichtung der Schneidplatte (1) hinter der Schneide (4) angeordnete Spankammer
(6) einen wendelartigen Verlauf relativ zur Drehachse (5) der Schneidplatte (1) aufweist.

3. Schneidplatte nach einem der Ansprüche 1 oder 2, dadurch g e k e n n z e i c h n e t , daß die wendelartige Schneide (4) vom stirnseitigen Bereich (7) der Schneidplatte (1) zu deren rückseitigem Bereich (8) hin in Drehrichtung rückläufig ausgebildet ist.

4. Schneidplatte nach einem der Ansprüche 1 bis 3, dadurch g e k e n n z e i c h n e t , daß die Schneidplatte (1) symmetrisch zur Drehachse (5) ausgebildet ist und daß die Schneiden (4) auf einer Hüllkugel angeordnet sind.

5. Schneidplatte nach Anspruch 4, dadurch g e k e n n - z e i c h n e t , daß der im stirnseitigen Bereich (7) der Schneidplatte (1) angeordnete wendelartige Schneidenbereich (4) in Drehrichtung vorlaufend ausgebildet ist.

6. Schneidplatte nach einem der Ansprüche 1 bis 3, dadurch g e k e n n z e i c h n e t , daß die Schneidplatte (1) symmetrisch zur Drehachse (5) ausgebildet ist und daß die Schneiden (4) auf einem Hüllzylinder angeordnet sind.

7. Schneidplatte nach einem der Ansprüche 1 bis 6, dadurch g e k e n n z e i c h n e t , daß der Aufnahmeteil (2) mit einer Ausnehmung (9) für ein Befestigungsorgan (10) versehen ist.

0216064

FIG.1

FIG.2

FIG.3

FIG.4

FIG.5

FIG.6

FIG.7

0216064

FIG. 8

Europäisches
Patentamt

# EUROPÄISCHER RECHERCHENBERICHT

**0216064**

Nummer der Anmeldung

EP  86 11 0070

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | US-A-2 692 627  (STEARNS)<br><br>* Spalte 1, Zeilen 27-39; Spalte 3, Zeilen 7-45; Figuren 1-3 *<br><br>--- | 1,3,5,7 | B 23 C    5/14<br>B 23 C    5/22<br>B 23 B   51/00 |
| A | DE-A-3 247 138  (GÜHRING)<br>* Seite 8, Zeile 21  -  Seite  9, Zeile 13; Figuren 1, 2 *<br><br>--- | 1 | |
| A | GB-A-2 082 102  (W. KIENINGER KG)<br>* Zusammenfassung; Figuren 1-4 *<br><br>--- | 1 | |
| A | EP-A-0 065 149  (MAPAL)<br>* Zusammenfassung; Figuren 1-3 *<br><br>--- | 1 | |
| A | EP-A-0 096 147  (SECO TOOLS AB)<br>* Seite  3,  Zeile 27 - Seite 3, Zeile 1; Figuren 1, 5-7 *<br><br>--- | 1 | RECHERCHIERTE SACHGEBIETE (Int. Cl.4)<br><br>B 23 B   51/00<br>B 23 C    5/00<br>B 27 G   15/00 |
| A | PLASTICS ENGINEERING, Band XXXVI, Nr. 2, Februar 1980, Seiten 22-24, Manchester, US; B.A. MACKEY: "How to drill precision holes inreinforced plastics in a hurry"<br>* Seite 22, Figur 1 *<br><br>---                          -/- | 1 | |

Der vorliegende Recherchenbericht wurde für alle Patentansprüche erstellt.

| Recherchenort | Abschlußdatum der Recherche | Prüfer |
|---|---|---|
| BERLIN | 12-11-1986 | MARTIN A E W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 5, Nr. 187, 26. November 1981; & JP - A - 56 107 816 (NIPPON SEISAKUSHO K.K.) 27.08.1981 | 1 | |
| A | DE-U-1 980 957 (DEUTSCHMANN) * Figuren 1-4 * | 1 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| BERLIN | 12-11-1986 | MARTIN A E W |